# FASCICULE DE BREVET EUROPEEN

(11) **EP 1 135 340 B1**
(45) Date de publication et mention de la délivrance du brevet: **11.05.2005**
(21) Numéro de dépôt: 00958699.1
(22) Date de dépôt: 18.08.2000
(51) Int. Cl.: C02F 3/02, C02F 3/28

(54) **REACTEURS SOLS ARTIFICIALISES POUR DES PROCEDES D'EPURATION ET DE RESORPTION COMBINES**
REAKTOR ZUR REINIGUNG UND RESORPTION VON ABWASSER
ARTIFICIAL SOILS REACTORS FOR COMBINED PURIFICATION AND RESORPTION

(30) Priorité: 24.08.1999 FR 9910827
(43) Date de publication de la demande: 26.09.2001
(73) Titulaire: Dautais, Jean-Pierre, 44115 Basse Goulaine (FR)
(72) Inventeur: Dautais, Jean-Pierre, 44115 Basse Goulaine (FR)
(86) Numéro de dépôt international: PCT/FR2000/002333
(87) Numéro de publication internationale: WO 2001/014260

(56) Documents cités:
- WO-A-93/02015
- DE-A- 3 938 555
- US-A- 4 251 359
- US-A- 5 707 513

## Description

La présente invention concerne l'épuration et la résorption combinés, structures actives de corps creux industrialisés compacts et de mélanges garnitures de matériaux naturels de types sols, artificiels creux ou pleins, granulaires ou fibreux et mixtes, , pour la constitution de réacteurs intégrés d'épuration, adaptables à toute situation de rejet, principalement à l'épuration d'effluents et à leur résorption optimisée dans le sol. Lesdites structures et matériaux, principalement enterrées, répondent à un meilleur usage des sols dits défavorables et correspondent à des compartiments à fonctions spécialisées, comme le lestage, l'habillage ou l'ancrage des différents réacteurs constitutifs de la chaîne de traitement, le piégeage et la gestion de boues ou flottants, la distribution, la répartition et la résorption initiale et finale, le pompage, ainsi que l'élimination de la pollution biodégradable, la dénitrification et la désinfection notamment. Ces procédés d'épuration sont utilisables préférentiellement en assainissement autonome et pluvial.

Les moyens actuels décrits dans de très nombreux brevets et dans la littérature spécialisée, n'apportent pas les solutions les plus efficaces, sur l'ensemble des critères d'élimination de la pollution, fondée sur une utilisation plus ou moins grande du sol artificiel ou dit "artificialisé" dans les fonctions d'épuration ou résorption des effluents, c'est à dire des solutions combinées, compactes pour une implantation superficielle ou enterrée ou en élévation, avec des composants standards, principalement synthétiques, faciles à industrialiser et transporter, solutions performantes sur tous les critères de pollution, en particulier l'azote et ayant la souplesse nécessaire à une adaptation à différentes situations difficiles d'implantation "agro-pédologiques" , hydrologiques ou de sols superficiels rapportés.

Les fosses septiques, les filtres biologiques à sable ou autres matériaux, notamment, ne disposent pas de systèmes appropriés de lestage ou de traitement tertiaire et de résorption rapide d'effluent.

Les épandages souterrains classiques, à fonction d'épuration secondaire en particulier sur effluent simplement décanté, n'ont pas l'efficacité requise, tant en hydrodynamique de résorption que pour l'épuration carbonée et surtout la nitrification/dénitrification.

La présente invention a donc pour objet principal de remédier à ces inconvénients et de progresser rapidement dans l'évolution des filières d'épuration dite autonomes faisant appel aux sols, en proposant d'une part des systèmes fonctionnels nouveaux ou optimisés dans leurs positionnements, compositions ,formes , simples ou mélanges composites, fibreuses, granulaires, séquestrants, supports physiques, chimiques, biologiques et hydrodynamiques, renouvelables ou non, compressibles ou non, et d'autre part des modes d'utilisation formant des réacteurs individuels ou composants associés, à fonction hydraulique et d'épuration.

A cet effet la présente invention concerne le choix approprié de formes allongées ou compactes, en particulier de faisceaux de microtunnels, corps creux et accessoires, de matériaux actifs en particulier sur les porosités statiques et dynamiques, comme les géo-synthétiques, billes de verres expansés notamment, ces structures et matériaux étant préexistants ou non, ainsi que les principaux modes de réalisations et sélections fonctionnelles suivantes :
- Dispositifs de lestage et d'ancrage de filtres plus ou moins massifs soumis à une pression hydrostatique, ou de renforcement et d'habillage de fosses ou filtres, formés de blocs modulaires, préférentiellement massifs et périphériques, en moules perdus ou non, avec des réservations de passages hydrauliques, en position ou non d'ancrages périphériques liés ou non à des inserts à fonction mécanique (Cf. planche 1 et 5),
- Dispositifs de fosses de prétraitement et accessoires, anaérobies ou non, préférentiellement, allongées ou linéaires, cloisonnés ou non, superposés ou non, en boucle ou non, en batterie ou non, à liaisons maillées ou non des fluides pour l'alimentation, la distribution, la vidange, le recyclage, en vue d'optimiser les conditions d'épuration et d'intégration, notamment en interlignes entre des batteries de filtres. Chaque élément volumique et pariétal de fosse se voit attribuer une ou plusieurs fonctions, par exemple, hydraulique, d'aération, de stockage et d'extraction des graisses ou boues, d'épuration à cultures fixées sur supports appropriés en surface spécifique ou alimentation ou chaleur localisée. Les éléments volumiques sont renforcés, cloisonnés ou non pour la résistance mécanique et pour les fonctions maîtrisées de transit ou associent des volumes élémentaires pour constituer des unités, elles-mêmes utilisables en batteries (Cf. planches 1 à 6),
- Dispositifs fosses de prétraitement et accessoires, formant un habillage plus ou moins couvrant, haut et latéral de filtres et zones de résorption, avec des fonctions complémentaires de type ballast couplé ou non à un ancrage, un compartiment haut large à flottants, une partie intermédiaire à forte surface spécifique biologiquement active et une ou plusieurs zones plus profondes, ce type de fosse pouvant également être utilisée indépendamment d'une fonction couverture active.

Les zones plus profondes sont préférentiellement latéralisées pour améliorer le stockage et gestion des boues, la circulation des fluides étant reliée préférentiellement à un réseau réservoir maillé gaz-liquide, pour des modules associés et les gaz pollués secondaires transitant dynamiquement dans un filtre de désodorisation, préférentiellement à charbon actif ( Cf. planche 5 ),
- Dispositifs réservoirs de changement partiel d'états "solide-liquide" et de "concentration-séparation-extraction" , fonctionnant en boucle ou au fil de l'eau, préférentiellement en sortie des fosses septiques de prétraitement, pour améliorer le piégeage des matières en suspension et en partie dissoutes, utilisant préférentiellement une membrane électro-thermique ou échangeur "coagulant-coalescent" ou biologiquement active et filtrante, pouvant également être vecteur d'injection ou diffusion d'activateurs ou adjuvants de dépollution (Cf. planche 5),
- Dispositifs de résorption et traitement complémentaire d'effluent, préférentiellement situé en périphérie de filtre biologique et indépendants, comprenant, les liaisons d'alimentations, le tunnel tampon et de gestion des matières en suspension et autre fonction d'épuration ou hydraulique, fixe ou mobile, le tampon filtre de distribution, l'aire de résorption composite compacte, entre deux niveaux de sols plus ou moins artificialisés, pour améliorer l'hydrodynamique et l'épuration finale (planche 1 à 4 ),
- Dispositifs de traitement et de résorption indépendants, principalement faisceaux de tunnels ou voûtes-tuiles, utilisables en entrée ou en sortie de prétraitement ou de traitement secondaire, par exemple fosse septique biofiltre et tranchée d'épandage, comprenant tout ou partie des éléments suivants, un ou plusieurs faisceaux de réservoirs de distribution préférentiellement alimentés par répartiteur gravitaire ou par chasse, des tubes répartiteurs, une surface d'alimentation et des gestion des boues plus ou moins néoformées, une matrice d'épuration, préférentiellement composite fibres/grains/volumes vides, pour une élimination de la pollution carbonée et la nitrification/dénitrification, un réservoir composite de traitement et de distribution latérale, une nappe composite de résorption/drainage, très poreuse, préférentiellement granulo-fibreuse et accolée aux sols plus ou moins artificialisés, un maillage de liaison des fluides, préférentiellement en relation avec le maillage des fluides du prétraitement (Cf. planches 1 à 5),
- Dispositifs complets en batterie rassemblant les composants fosses et accessoires, distributions et ventilation , filtres, résorptions et sols artificialisés en contact (Cf. planches 2 et 4),
- Dispositifs simplifiés ne comprenant que le bloc stockage-alimentation de filtres artificiels ou un sol remanié et plus ou moins artificialisé, l'équipement de résorption, pouvant être disposé en ligne ou en îlots plus ou moins dispersés, ces équipements regroupant un kit de distribution/aération/drainage, association composite à deux ou trois composants ou plus, "géosynthétiques - billes - tuiles ou autres corps creux", kits utilisable sous, dessus ou à coté de dispositifs d'épuration dits secondaires, principaux ou tertiaires (Cf. planches 1 à 5).

A partir de matériaux naturels ou industrialisés, il devient possible de réaliser, au moyen d'opérations simples, l'ensemble des structures ou réservoirs et matériaux actifs, particulièrement adaptés à l'épuration, la séparation de phases, la fixation biologique, l'extraction de polluants et à la bonne distribution des fluides, pour chaque critère d'épuration ou hydraulique et tout au long du cheminement de transfert et de transformations complexes et interactives. Les volumes réacteurs actifs et supports ainsi créés sont adaptés à être placés facilement et en proportions et positions adéquates, dans tout réacteur sol d'épuration, principalement souterrain, ou à proximité, également par transfert technologique, pour tout ou partie des fonctions d'épuration et hydrauliques dans des filtres biologiques industrialisés principalement non saturés.

Des modèles principaux d'exécution sont décrits et illustrés ci-après à titre d'exemple :
- Pour la planche 1 / 5 :
   La figure 1A est une vue en coupe verticale des dispositifs illustrant le positionnement des structures actives physiquement et biologiquement, autour ou à coté d'un biofiltre massif quelconque,
   Les figures 1B et 1C, sont des vues en coupe illustrant des variantes de lests ou de renforcements ou d'habillage en filtre-massif et "filtre ou réacteur-sol-artificiel",

Pour la planche 2 / 5 :
   La figure 2 est une vue en coupe horizontale des mêmes structures d'alimentation, de lestage, de filtration et de résorption, présentée à la figure 1A,
   La figure 3 est une vue en coupe verticale présentant le détail du dispositif de résorption en sol artificialisé et sa protection "piège-épuration" amont,
   La figure 4 est une vue en coupe horizontale des mêmes structures que la figure 3, montrant une batterie de dispositifs de résorption, ainsi que la position de dispositifs d'aération et de drainage,
Pour la planche 3 /5 :
   La figure 5 est une vue en coupe verticale d'une option de protection des dispositifs de résorption, pour le piégeage de matières en suspension et l'épuration carbonée ou azotée,
   La figure 6 et les détails A et B, sont des vues en coupe verticale d'un filtre-sol-artificialisé plus ou moins fortement avec son sol naturel ou rapporté, et son environnement de drainage aération,
Pour la planche 4 / 5 :
   Les figures 7A et 7B sont des vues en coupe verticale de faisceaux-fosses uniques ou associées, 7C des fosses empilées, 7D en boucle, les embouts de fermeture et maillages de liaison des fluides, .
   La figures 8A est une vue en coupe horizontale des fosses en batterie et maillées, plus ou moins éloignées et à ventilation régulée et 8B une associations fosses et filtres-sols-artificiels, avec son unité d'extraction éolienne ou équivalent, à clapet de régulation de débit, d'épuration des gaz et d'aération dynamique assistée.
Pour la planche 5 / 5 :
   La figure 9A est une vue en coupe transversale illustrant la répartition des fonctions d'épuration dans une fosse, la figure 9B des fonctions en distribution horizontale de fosse à fosse, associées en parallèle ou en série,
   La figure 10 est une vue en coupe transversale d'une fosse et ses accessoires associés étroitement à un filtre ou tranchée d'épandage artificialisée,
   Les figure 11A et 11B présentent le positionnement de dispositifs d'amélioration de l'épuration et du piégeage des matières en suspension et dissoutes, pouvant êtres indépendants ou intégrés.

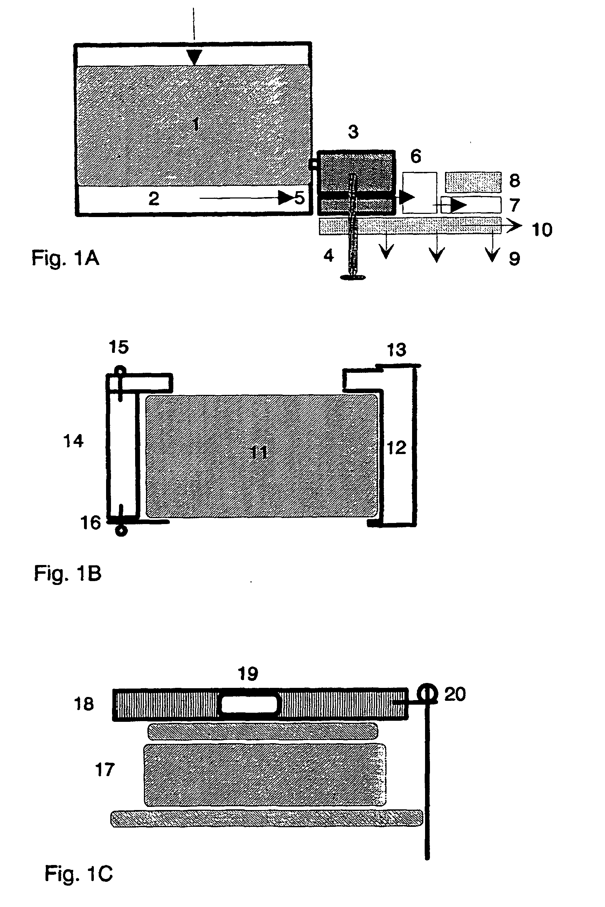

De préférence le dispositif général innovant ( Figure 1A ) permettant la meilleure utilisation des matériaux et structures destinés à l'épuration de fluides est équipé , en sortie d'un filtre amont (1) ou autre, de son nouveau drainage ou drainage existant (2), avec des évacuations vidanges (5), d'un lest en béton ou graves ou autre, dans un réservoir étanche ou non (3), avec ancrage ou non (4) pour compenser la pression de nappe, un réservoir composite séparateur (6) d'extraction de particules et d'alimentation du système zone de résorption à fonction hydraulique (7, 10) entre deux couches de sols plus ou moins artificialisés (8 et 9), surmontés ou non du sol naturel.

Dans une vue en coupe ( Figure 1B ), une variante de lestage d'une fosse (11) correspond à des réservoirs latéraux (12 et 14), réservoirs accessibles au lest par une ouverture (13) ou constitués de modules lests en béton solidarisés (15) et autres plaques à fonction mécanique principalement (14). Dans une vue en coupe (Figure 1C ), une variante d'habillage ou lest (18) avec ancrage (20) et ses réservations ou accessoires (19),surmonte un complexe d'épandage (17) ou une fosse.

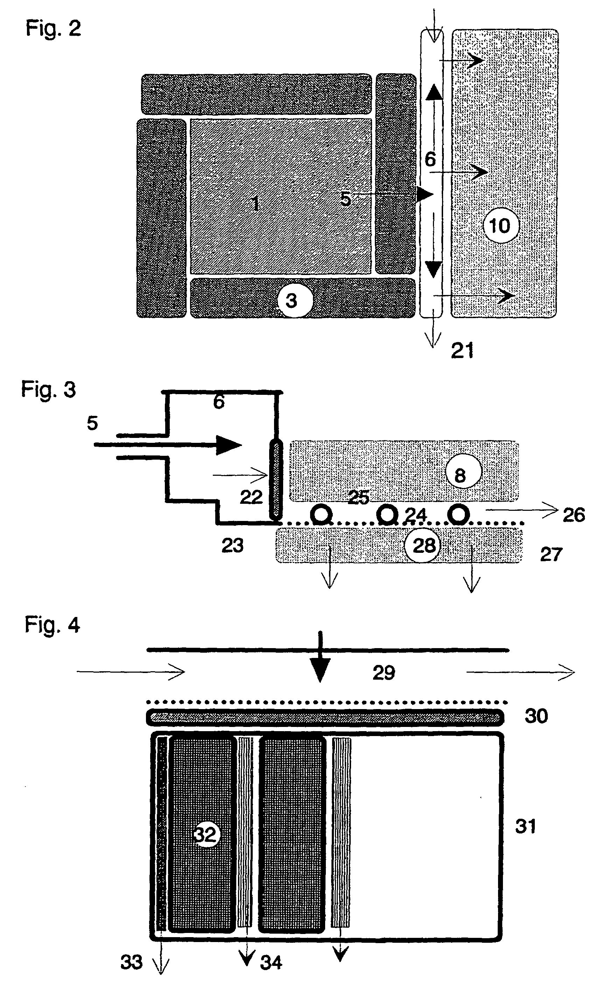

Dans une vue en plan ( Figure 2 ), le caractère standard du lestage et de l'aire de résorption apparaît dans la disposition principale en couronne autour du filtre et qui limite la formation d'un dôme de drainage. Les modules de lestage (3), peuvent entourer le filtre à ancrer. Les aires de traitements complémentaires et de résorption(6 et 10), avec renouvellement possible ou vidange, viennent par exemple suivant le même modèle en couronne en extérieur, à plus ou moins grande distance.

Dans une vue en coupe ( Figure 3 ), le complexe de traitement et de résorption montre un positionnement des fonctions complémentaires, résorption, épuration et gestion des dépôts. L'effluent pénètre dans le complexe par une liaison (5), se débarrasse de ses matières en suspension, dans un réservoir (6) grâce à un filtre (22), qui sont extraites par lavage ou pompage dans un couloir de rétention (23) ou autre solution dynamique. L'effluent pénètre dans une nappe ou compartiment complexe horizontal (26) en géo-composite, grains et fibres (24), très poreux, à ventilation contrôlée (25) reposant sur un sol préférentiellement artificialisé (27) par apport de fibres ou grains (28), avec au dessus préférentiellement un sol artificialisé (8) favorable à la ventilation, notamment.

De préférence la zone système de résorption (30, 31) est indépendante du filtre biologique amont ou équivalent( Figure 4 ), toujours avec un dispositif de gestion des dépôts (29) et autres fonctions, la zone de résorption (31) étant constituée de bandes alternées à vocation drainage de protection contre des apports (33), résorption de l'effluent (32) et ventilation/réservoir (34).

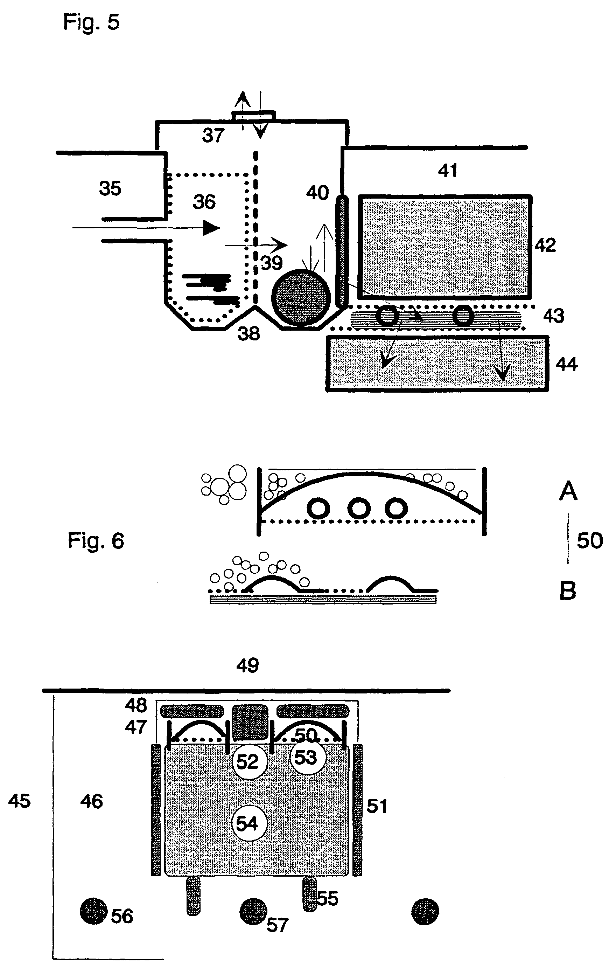

Dans une structure (35) plus élaborée vue en coupe ( Figure 5 ) l'effluent brut se débarrasse de ses matières en suspension ou boues dans un sas mobile ou équivalent vidangeables (36), à ventilation contrôlée (37), pénètre ensuite dans un compartiment d'épuration complémentaire (38) de dénitrification, et/ou de déphosphatation, et/ou de désinfection et/ou de correction chimique ou biologique, faisant appel à des matériaux ou matériels actifs (39, 40 ) mobiles ou amovibles de préférence.

L'effluent ainsi traité se déplace de meilleure façon dans le complexe de résorption plus ou moins anisotrope (43, 44), latéralement au dessous du sol de couverture et remanié ou articicialisé (41, 42).

Une vue en coupe de tranchée (45) compacte ( Figure 6 ), préférentiellement réalisée en position souterraine (49), avec une proportion notable de sol naturel artificialisé (46) également utilisable hors sol, comprend un sol artificiel actif (54) mélange anisotrope par exemple de fibres minérales ou naturelles stabilisées et de grains minéraux expansés, avec latéralement un géo-synthétique ou équivalent cloison active (51), plus ou moins fine à semi-perméabilité air/eau contrôlée suivant le type de sol et degré de saturation, reposant sur le sol en place remanié ou artificialisé, ventilé ou non (57), drainé ou non (56), avec continuité capillaire par mèches de résorption ou non (55) et surmonté de modules d'alimentation aération (47, 48), faisceaux de tunnels ancrés (50) et accueillant le dispositif de distribution fractionnée(53) et de ventilation forcée ou non, granulaire et/ou fibreuse, avec un espace libre d'effluent (52). ces modules d'alimentation étant également utilisables en drainage résorption en fonction du type de sol. Les schémas A et B illustrent des formes de voûtes en plaques contraintes ou mini-tunnels en forme de tuiles principalement extrudables et faciles à associer en fonction alimentation, en association avec un géo-synthétique et autres billes ou grains expansées notamment.

Pour faciliter l'intégration des prétraitements d'épuration avant usage du sol artificialisé en situation souterraine, les géométries de réservoirs sont principalement allongés, aplaties et modulaires.

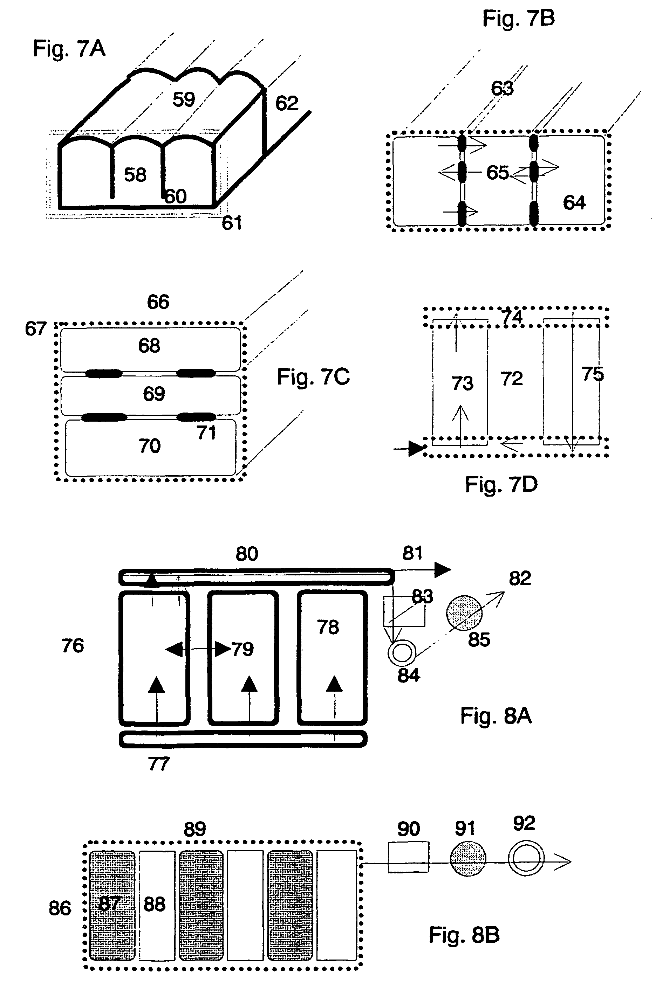

Pour la planche 4 / 5, la Figure 7A est une vue en coupe d'une fosse septique à cloisonnements partiels dans le sens longitudinal et transversal (60 et 62) et voûtes, délimitent des volumes (58) plus ou moins identiques, des surfaces de contact, pour des raisons d'épuration et de renforcements mécaniques et de distribution de liquide, en favorisant la dissipation d'énergie du jet d'alimentation, les extrémités (61) fermant le réservoir fosse et recevant les réservations hydrauliques.

La Figure 7B est une variante vue en coupe qui associe trois compartiments à l'horizontale (64) définis par cloisonnements ou liens servant de clips (65), pour former un volume fonctionnel (63).

La Figure 7C, est une variante vue en coupe qui associe trois compartiments plats (68, 69, 70), à la verticales (66), avec des passages ou clips identiques ou équivalents, par exemple soudés, avec des extrémités 67,

La figure 7D, est une variante où deux compartiments (73,75) sont séparés par un espace libre (72) pouvant accueillir un filtre par exemple et dont les extrémités (74) assurent la continuité hydraulique.

La Figure 8A est une vue en plan d'éléments volumiques (78) et liés (79), regroupés en batterie (76) par des extrémités volumes de liaison fonctionnels (80), facilitant le transit des fluides, pour une évacuation directe de liquide (81), ou de gaz viciés à travers un extracteur préférentiellement éolien (84), avec régulateur de débit à volet (83) préférentiellement vers une cartouche de désodorisation (85) avant évacuation (82),

La figure 8B est une vue en plan de fosses (87) et filtres (88) en batterie (86), solidarisés pour le passage des fluides (89) avant de rejoindre les équipements de vidanges ou d'extraction des fluides dans un ordre quelconque, régulateur (90), cartouche (91) et éolienne ou autre extracteur (92).

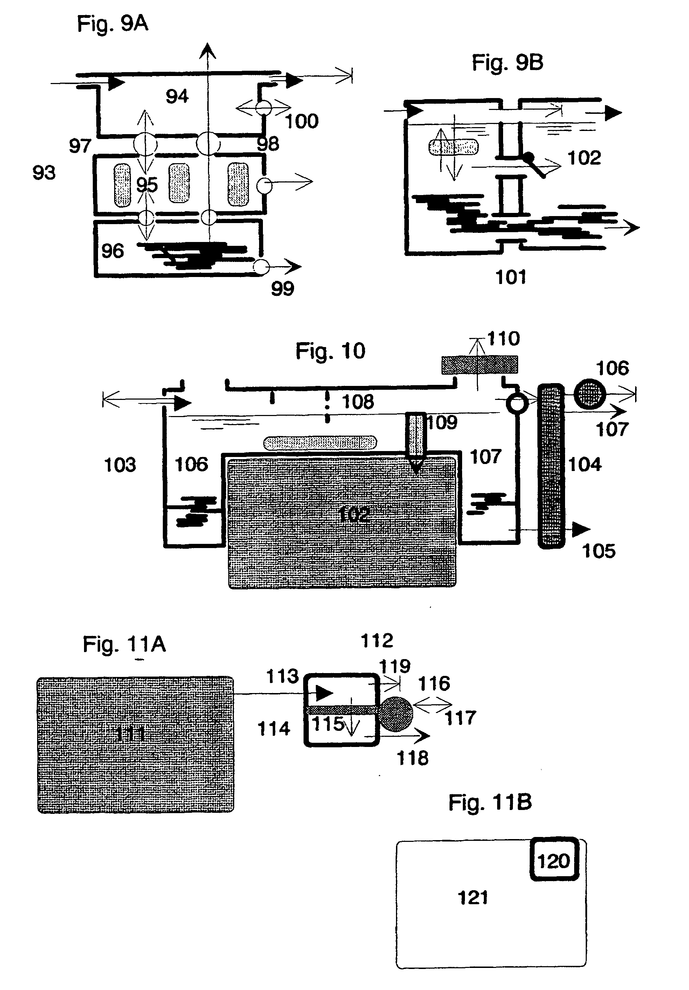

Pour la Planche 5 / 5, la Figure 9A est une vue en coupe vertical qui apporte des précisions sur la distribution des fonctions d'épuration dans le réacteur à volumes superposés (93), avec préférentiellement une alimentation et vidange dans un compartiment de dégraissage (94) communiquant librement avec un compartiment (95) à cultures fixées sur support (95) puis un compartiment de stockage des boues (96), ces trois compartiments étant en échange hydraulique permanent libre par la taille des ouvertures plutôt larges (97) utilisables pour l'extraction des boues (98),

La Figure 9B est une variante de distribution horizontale, également à cultures fixées, dite piston, avec des passages spécialisés pour les boues (101) et l'effluent à travers une membrane filtrante clapet (102),

La figure 10 est une vue en coupe d'une filière sol plus intégrée, comprenant tout ou partie des éléments du filtre souterrain (102), fosse couvrante à cultures fixées dans la partie horizontale, avec un ou deux volumes de stockage des boues (106, 107), une paroi renforcée (108), un trop plein filtrant vers le filtre et pouvant accueillir un préfiltre et accessoires de chasse-alimentation, une ventilation dynamique filtrée (110), un compartiment connecté "fluides" (104) pour l'extraction de boues (105),d'effluent liquide (107) et de gaz vers une désodorisation ventilation (106).

La figure 11A est une vue en coupe d'un appareil complémentaires de changement d'états pour séparation extraction de polluants (112, 120) intégrable ou non à la fosse de prétraitement (121, 111), et comprenant un compartiment d'alimentation (113) et dégazage (119), de réception (115), de vidange (118), avec une partie active de chauffage filtration (116) et d'injection de produits actifs (117).

Le principe général de fonctionnement des dispositifs dits réacteurs-sols, fosses, filtres et résorption finale, est illustré par la description du cheminement d'un effluent domestique dans quelques structures principales choisies comme témoins

Dans la Figure 1A, l'effluent arrive du filtre biologique, lesté et ancré contre la poussée d'Archimède. Pauvre en DBO5, nitrifié, débarrassé de ses matières en suspension grâce au piège à un tampon filtrant (6), il est peu colmatant quant il pénètre dans un compartiment réservoir de distribtion-stockage plat, préférentiellement par gravité (7,10). La présence de cavités facilite la ventilation et le stockage. L'eau/effluent répartie sur une grande surface et à faible gradient journalier, pénètre facilement dans le sol aéré, plus ou moins remanié et artificialisé, suivant les règles du drainage, avec peu d'altération du débit d'infiltration et surtout, une bonne efficacité aérobie, utile pour poursuivre l'épuration finale dans de bonnes conditions.

Dans la figure 5, la dénitrification de l'effluent nitrifié en amont et avec un rapport C/N trop élevé, est assistée par l'introduction de substances carbonées dans un système mobile ou exploitable (39), la résorption par complexe fibro-granulaire étant de même nature.

Dans la figure 6, la tranchée d'épandage moderne est souterraine, avec un étage d'épuration ou non, en fonction de la présence ou non d'un filtre amont. La structure réservoir compacte d'alimentation sert à la fois de structures de constitution de voûtes plaques préférentiellement contraintes ou ondulées en forme de tuiles associées, de faible hauteur et d'aires de ventilation par exemple grâce à des granulats ou fibres. L'effluent et les boues sont gérés dans ces tunnels de petites dimensions et étroits (50, A), avant de pénétrer dans le matériau à base de sol artificialisé, donc corrigé en porosités pour le rendre plus efficace (54), ou directement dans un sol plus ou moins remanié ou artificialisé. L'effluent traité est résorbé vers le sol en place garni de mèches à continuité capillaire (55), ventilé par des corps creux discontinus et protégé contre les invasions d'eau par drainages latéraux (56, 57). Dans une simple fonction de résorption de l'effluent épuré, les voûtes reposent sur un sol simplement remanié. Dans une fonction d'épuration intégrée, il y a en entrée un système voûte d'alimentation et gestion des boues, au milieu un filtre sol artificialisé et à la sortie une structure complexe fibres-grains-voûte de résorption de même nature (50).

Dans la Figure 9A, la spécialisation des compartiments, notamment à cultures fixées, préférentiellement brassées, est favorable à la minéralisation et à l'extraction ménagée des boues. Dans la figure 9B, les boues circulent en écoulement lent et libre entre compartiments avec un gradient biologique dû à l'effet piston. Le second type de passage, unique ou multiple est à la fois filtrant et à fonction hydraulique clapet d'amortissement pour des pointes.

Dans la Figure 10, le positionnement de la fosse au dessus d'un filtre ou épandage est plus ou moins couvrant. la forme en U renversé est utile à l'optimisation des fonctions d'épuration, hydraulique, alimentation piégeage des matières et boues, biologique pour la minéralisation en limitant les temps de latence biologique entre vidange ou démarrage.

Dans la Figure 11A, l'équipement de séparation de distingue d'un simple préfiltre, en apportant un effet thermique de coagulation coalescence, de piégeage par filtration et offrant la possibilité d'injecter des adjuvants d'épuration.

Les structures actives, matériaux, formes de réacteurs sols d'épuration, ne sont pas limités aux matériaux et modes de réalisations choisis et représentés, de nombreuses autres variantes restent à la porté de l'homme de l'art, pour de nombreuses applications de traitement de fluides, principalement les eaux usées en assainissement autonome, mais aussi pour les filtres biologiques, également en rechargement de nappe et traitement des eaux industrielles et pluviales, après certaines adaptations, l'objet de la présente invention étant défini dans les revendications 1-10.

## Revendications

1. Dispositif d'épuration de fluides comprenant:
- un réacteur filtre biologique (1) comprenant des filtres, ledit réacteur étant préférentiellement lesté (3) ou ancré contre la poussée d'Archimède;
- un réservoir composite (6) dans lequel s'écoule l'effluent pauvre en DBO5 et nitrifié issu de (1) et dans lequel l'effluent est débarrassé de ses particules en suspension grâce à un filtre (22), les particules étant extraites de préférence dans un couloir de rétention (23) ;
- un système de résorption à fonction hydraulique (10) alimenté par ledit fluide débarrassé de ses particules et disposé entre deux couches de sol (8, 9, 27) plus ou moins remanié ou artificialisé, ledit système comprenant une nappe ou compartiment horizontal (26, 43) très poreux en géocomposite, grains et fibres (24), à ventilation contrôlée (25), dans lequel l'effluent est traité de manière aérobie avant d'être résorbé vers le sol en place.

2. Dispositif d'épuration selon la revendication 1,
**caractérisé en ce que** le réservoir (6) d'extraction de particules et d'alimentation du système de résorption (10), qui est équipé d'un filtre (22) qui piège les matières en suspension dans l'effluent, comporte en outre des moyens d'extraction par lavage ou pompage desdites matières en vue de les amener notamment dans un couloir de rétention (23).

3. Dispositif d'épuration selon la revendication 1,
**caractérisé en ce que** le réservoir (6) composite est constitué d'un sas (36) vidangeable à ventilation contrôlée (37) et d'un compartiment d'épuration complémentaire (38) contenant des matériels actifs (39, 40) à des fins de dénitrification et/ou de déphosphatation et/ou de désinfection et/ou de correction chimique ou biologique.

4. Dispositif d'épuration selon la revendication 1,
**caractérisé en ce que** le sol artificialisé (9, 27), support du système de résorption (7, 10) et qui est constitué, de préférence, d'un mélange anisotrope de fibres minérales ou naturelles stabilisées et de grains minéraux, de préférence expansés, est équipé latéralement de cloisons actives (51) formées, par exemple, d'un géosynthétique, chaque cloison active (51) ayant une semi-perméabilité air/eau contrôlée en fonction du type de sol et du degré de saturation.

5. Dispositif d'épuration selon la revendication 1,
**caractérisé en ce que** le sol artificialisé (9, 27) support du système de résorption (7, 10) est garni de mèches (55) à continuité capillaire.

6. Dispositif d'épuration selon la revendication 5,
**caractérisé en ce que** le sol artificialisé (9, 27) est ventilé par des corps creux discontinus et protégé contre les invasions d'eau par des drainages latéraux (56, 57).

7. Dispositif d'épuration selon la revendication 1,
**caractérisé en ce que** le système de résorption (7, 10) comporte en outre, en combinaison, des voûtes plaques contraintes ou ondulées en forme de tuiles.

8. Dispositif d'épuration selon la revendication 1,
**caractérisé en ce que** le sol artificialisé (8), disposé au-dessus du système de résorption (7, 10), est lui-même surmonté d'un sol naturel.

9. Dispositif d'épuration selon la revendication 1,
**caractérisé en ce qu'**il comporte une pluralité de réservoirs composites (6) et de systèmes (7, 10) de résorption qui sont réalisés sous forme de lignes ou sous forme d'îlots.

10. Dispositif d'épuration selon la revendication 1,
**caractérisé en ce que** le réacteur biologique (1) est un réacteur comprenant des fosses cloisonnées, plates ou allongées.

## Patentansprüche

1. Vorrichtung zur Reinigung von Fluiden durch Perkolation durch sukzessive, in einer Umschließung zusammengefasste Abteilungen, mit:
- einer oberen Abteilung (1) zur Versorgung mit zu behandelndem Fluid mit einer für das Festhalten der Schwebestoffe bestimmten Membran (2, 42);
- einer Zwischenabteilung, in deren oberen Abschnitt (5, 46) das Abwasser des vorhergehenden Schritts eingeführt wird und in dem die Kohlenstoffreinigung und die Nitrifizierung dominieren, wobei diese Abteilung eine faserige Matrix und Mikrostrukturen enthält, welche unter den folgenden ausgewählt werden:
i) den wabenartigen Hohlkugeln,
ii) den faserigen Flocken,
iii) den Schalen bildenden Chips,
iv) den kalandrierten oder gepressten Vliesen aus Steinfasern
sowie eine Verbindung mit einer primären Belüftung, wobei das Abwasser anschließend durch eine untere Ebene (11, 47) in einer durch Einlagen gebildeten Membranzone zur Denitrifizierung für die Beseitigung von pathogenen Stoffen durch Kontakt mit einem Desinfektionsmaterial oder durch elektrische Influenz strömt;
- einem Ablauf zur Beseitigung des behandelten Abwassers vorzugsweise durch einfache Drainage.

2. Reinigungsvorrichtung nach Anspruch 1,
**dadurch gekennzeichnet, dass** die faserige Matrix sekundären Behandlungen zur Verdichtung und/oder Benetzbarkeit und/oder Komprimierung und/oder Kardierung unterzogen wird, um Gradienten von Porositäten

3. Reinigungsvorrichtung nach Anspruch 1 und 2,
**dadurch gekennzeichnet, dass** die faserige Matrix sich in Form von Pinseln (36) und/oder von Bürsten (37) und/oder von faserigen Teppichen mit festen oder beweglichen Kompressionspunkten (38) darstellt, welche Formen Feuchtigkeitsgradienten erzeugen.

4. Reinigungsvorrichtung nach Anspruch 1,
**dadurch gekennzeichnet, dass** in der oberen Abteilung die von der Membran (42) als Verteilungsregler festgehaltenen Schwebestoffe durch Entleerung abgeschieden werden.

5. Reinigungsvorrichtung nach Anspruch 1,
**dadurch gekennzeichnet, dass** die Zwischenabteilung Einlagen mit Heizbändern (14) enthält.

6. Reinigungsvorrichtung nach Anspruch 1,
**dadurch gekennzeichnet, dass** die Zwischenabteilung Hohlvolumen (16) zum Einspritzen von schwebenden Substraten (17) oder zum Einspritzen durch ein eine Hülse (18) mitnehmendes Becherwerk aufweist.

7. Reinigungsvorrichtung nach Anspruch 1 und 5,
**dadurch gekennzeichnet, dass** die Zwischenabteilung Hohlvolumen zum Einspritzen von Substraten, zur Beseitigung des Phosphors und/oder der nicht abgebauten erschmutzenden Stoffe und/der zur Denitrifizierung enthält.

8. Reinigungsvorrichtung nach Anspruch 1 und 5,
**dadurch gekennzeichnet, dass** in der Zwischenabteilung die versorgende Becherkette durch einen Diffusionsbehälter (39) gebildet ist, welcher vorzugsweise rohrförmig ist und

9. Reinigungsvorrichtung nach Anspruch 1,
**dadurch gekennzeichnet, dass** die kastenförmige Abteilung leitende Geogitter-Desinfektionselektroden (53) enthält.

10. Reinigungsvorrichtung nach Anspruch 1,
**dadurch gekennzeichnet, dass** das aus der Zwischenabteilung austretende Abwasser vor Beseitigung in einen waagerechten, Fasern und Mikrostrukturen in einem Becherwerk oder in Patronen (26) mischenden Filter eintritt.

## Claims

1. Fluids treatment device using percolation through successive compartments grouped together in an enclosure, this said enclosure comprising :
- an upper compartment (1), fed with effluent to be treated, involving a membrane (2,42) to retain suspended solids;
- a middle compartment which receives, through its top part, (5,46) the effluent from the prior step and where the carbonated purification and nitrification occur, this compartment including a fiber matrix and selected microstructures among which:
i) honeycomb style spheres
ii) fiber flakes
iii) chips forming basins
iv) layers of pressed or calendered rock fibers
- a connection with a primary vent;
- a bottom compartment (11,47) where the effluent passes through a membranous area of denitrification made of layers that enables
a) pathogens removal by disinfection material or by passive flow of electrical current , and
b) treated effluent disposal by simple drainage.

2. Fluids treatment device as per claim 1,
**characterized by** its fiber matrix receiving secondary treatments of induration and/or wettability and/or compression and/or carding to establish gradients of porosity.

3. Fluids treatment device as per claims 1 and 2,
**characterized by** its fiber matrix shaped like brushes (36) and/or fibrous rugs with fixed or movable compression points (38) creating gradients of moisture or humidity.

4. Fluids treatment device as per claim 1,
**characterized by** its upper compartment flow regulator membrane (42) that retains suspended solids that can be removed by dumping.

5. Fluids treatment device as per claim 1,
**characterized by** its middle compartment containing layers of heating tapes (14).

6. Fluids treatment device as per claim 1,
**characterized by** its middle compartment containing hollow volumes (16) for suspended substrates injection (17) or for injection by noria creating a hollow shaft or pipe sleeve (18).

7. Fluids treatment device as per claims I and 5,
**characterized by** its middle compartment containing hollow volumes for substrates injection for phosphorous and/or non-degradable pollutants removal and/or for denitrification.

8. Fluids treatment device as per claims 1 and 5,
**characterized by** the fact that, in its middle compartment, the noria feeder is made of a diffusing reservoir, preferably of a tubular shape, and equipped with interchange ports (40), or injection and waste pipes.

9. Fluids treatment device as per claim 1,
**characterized by** its bottom compartment that contains geogrid conducting electrodes for disinfection (53).

10. Fluids treatment device as per claim 1,
**characterized by** the fact that the effluent, coming out of the middle compartment, enters, before disposal, into an horizontal filter (25) composed of a mix of fibers and microstructures in noria or cells (26).
